# EUROPEAN PATENT APPLICATION

(11) **EP 4 414 211 A1**
(43) Date of publication of application: **14.08.2024**
(21) Application number: 24156048.1
(22) Date of filing: 06.02.2024
(51) Int. Cl.: B60L 58/12

(54) **SYSTEM, SERVER,METHOD OF MANUFACTURING VEHICLE,AND CHARGING DEVICE**

(30) Priority: 08.02.2023 JP 2023017688
(71) Applicant: TOYOTA JIDOSHA KABUSHIKI KAISHA, Toyota-shi, Aichi-ken, 471-8571 (JP)
(72) Inventor: IWAHORI, Kento, TOYOTA-SHI, AICHI-KEN, 471-8571 (JP); YOKOYAMA, Daiki, TOYOTA-SHI, AICHI-KEN, 471-8571 (JP)
(74) Representative: Cabinet Beau de Loménie

(57) **Abstract**

A system (500) used in a factory (FC) for manufacturing a vehicle (100) includes: a remote control unit (312) remotely controlling a vehicle (100) capable of running in a factory (FC) in a manufacturing process at the factory (FC), the vehicle (100) including a communication device having a communication function for remote control and a secondary battery for running; a state-of-charge acquisition unit (318) acquiring a state of charge of the secondary battery; and a state-of-charge adjustment determination unit (314) acquiring a target value of the state of charge and determining whether or not to adjust the state of charge using the acquired target value and a current state of charge. When the state-of-charge adjustment determination unit (314) determines that the state of charge is to be adjusted, the remote control unit (312) executes a state-of-charge adjustment process by the remote control of the vehicle (100), thereby bringing the state of charge closer to the target value, wherein the state-of-charge adjustment process includes at least one of a discharging process for discharging the secondary battery and a charging process for charging the secondary battery.

## Description

### BACKGROUND

### FIELD

The present disclosure relates to a system, a server, a method of manufacturing a vehicle, and a charging device.

### RELATED ART

To efficiently operate a manufacturing system for producing vehicles, for example, Japanese Translation of PCT International Application Publication No. JP-T-2017-538619 discloses a method which involves maneuvering a vehicle autonomously or under remote control from the end of an assembly line to a parking lot in the manufacturing system.

When running, the vehicle consumes the power of a secondary battery mounted on the vehicle for running. From the viewpoint of suppressing the deterioration of the secondary battery, it is preferable that a state of charge (SOC) of the secondary battery should be managed at an appropriate value during the manufacturing process of the vehicle. In the manufacturing process of vehicles by utilizing the autonomous control or remote control, there is a need for a technology to manage the SOC of the secondary battery at an appropriate value while the vehicle is running under the autonomous control or remote control.

### SUMMARY

The present disclosure is implementable by having the following aspects.
(1) According to a first aspect of the present disclosure, a system used in a factory for manufacturing a vehicle is provided. The system includes: a remote control unit remotely controlling the vehicle capable of running in the factory in a manufacturing process at the factory, the vehicle including a communication device having a communication function for remote control and a secondary battery for running; a state-of-charge acquisition acquiring a state of charge of the secondary battery; and a state-of-charge adjustment determination unit that acquires a target value of the state of charge and determines whether or not to adjust the state of charge using the acquired target value and a current state of charge. When the state-of-charge adjustment determination unit determines that the state of charge is to be adjusted, the remote control unit executes a state-of-charge adjustment process by the remote control of the vehicle, thereby bringing the state of charge closer to the target value, wherein the state-of-charge adjustment process includes at least one of a discharging process for discharging the secondary battery and a charging process for charging the secondary battery.

According to the system of this aspect, the charging or discharging of the secondary battery is executed when the vehicle is driven through the remote control, thereby making it possible to adjust the state of charge to the state-of-charge target value. Therefore, in the manufacturing process of the vehicle utilizing the driving through the remote control, the state of charge of the secondary battery can be managed to be an appropriate value.
(2) In the system of the above aspect, the remote control unit may adjust an acceleration of the vehicle when the vehicle runs in the factory, as the state-of-charge adjustment process.

According to the system of this aspect, the state of charge of the secondary battery can be adjusted suitably by adjusting the acceleration, which significantly affects the power consumption.
(3) In the system of the above aspect, the remote control unit may execute at least one of an increase in the acceleration and an increase in number of times the vehicle is accelerated, as the discharging process.

According to the system of this aspect, the secondary battery can be discharged through the use of the acceleration at an earlier stage than during the normal running.
(4) In the system of the above aspect, the remote control unit may drive an auxiliary device consuming power of the secondary battery as the discharging process to thereby increase power consumption of the auxiliary device.

According to the system of this aspect, the impact of adjustment of the state of charge on the running of the vehicle can be reduced by the discharging using the auxiliary device.
(5) In the system of the above aspect, the remote control unit may move the vehicle to a position where the secondary battery is allowed to be charged by a charging device for charging the secondary battery, as the charging process.

According to the system of this aspect, even when the charging device is disposed at a location apart from a track between the processes, the charging process of the vehicle can be simplified.
(6) In the system of the above aspect, the remote control unit may further execute a discharging suppression process for suppressing the discharging of the secondary battery and a charging suppression process for suppressing the charging of the secondary battery, as the state-of-charge adjustment process.

According to the system of this aspect, the time required to adjust the state of charge through the discharging and charging processes can be shortened by suppressing the charging during the discharging process and also suppressing the discharging during the charging process.
(7) In the system of the above aspect, the remote control unit may execute at least one of a reduction in an acceleration of the vehicle when the vehicle runs in the factory and a reduction in number of times the vehicle is accelerated, as the discharging process.

According to the system of this aspect, the reduction in the state of charge in the vehicle during running can be suppressed suitably by using the acceleration of the vehicle in the discharging suppression process.
(8) In the system of the above aspect, the remote control unit may reduce an amount of regenerative power of the vehicle, as the charging suppression process.

According to the system of this aspect, the increase in the state of charge in the vehicle during running can be suppressed. Therefore, the amount of discharging in the discharging process can be reduced by suppressing the charging during the discharging process.
(9) In the system of the above aspect, the target value may be set using a state of charge required when the vehicle is shipped.

According to the system of this aspect, the state of charge of the secondary battery at the time of the shipment can be adjusted to an appropriate state of charge required for each destination of the shipment, such as each destination country.
(10) In the system of the above aspect, the target value may be set for each process in the manufacturing process.

According to the system of this aspect, the adjustment accuracy of achieving the final state-of-charge target value can be improved by adjusting the state of charge step by step for each process.
(11) According to a second aspect of the present disclosure, a server used in a factory for manufacturing a vehicle is provided. The server includes: a remote control unit remotely controlling the vehicle capable of running in a factory in a manufacturing process at the factory, the vehicle including a communication device having a communication function for remote control and a secondary battery for running; a state-of-charge acquisition unit acquiring a state of charge of the secondary battery; and a state-of-charge adjustment determination unit acquiring a target value of the state of charge and determining whether or not to adjust the state of charge using the acquired target value and a current state of charge. When the state-of-charge adjustment determination unit determines that the state of charge is to be adjusted, at least one of a state-of-charge adjustment process using the remote control unit and a notification using the state-of-charge adjustment determination unit is executed, the state-of-charge adjustment process including at least one of a discharging process for discharging the secondary battery by the remote control of the vehicle and a charging process for charging the secondary battery by the remote control of the vehicle, the notification being for encouraging at least one of a manual discharging operation for manually discharging the secondary battery and a manual charging operation for manually charging the secondary battery.

According to the server of this aspect, the charging or discharging of the secondary battery can be executed when the vehicle is driven through the remote control, thereby adjusting the state of charge to the target value. And, this aspect makes it possible to encourage an operator to perform charging and discharging through the notification in a case in which the charging or discharging is performed manually. Therefore, in the manufacturing process of the vehicle utilizing the driving through the remote control, the state of charge of the secondary battery can be managed to be an appropriate value.

The present disclosure is also implementable in various forms other than the system. For example, the present disclosure is implementable in the form of a vehicle, a charging device, a remote control method for a vehicle, a charging method for a vehicle, a control method for a charging device, a computer program, a non-temporary recording medium recording the computer program, and the like.

### BRIEF DESCRIPTION OF THE DRAWINGS

FIG. 1 is an explanatory diagram showing a schematic configuration of a system according to a first embodiment,
FIG. 2 is an explanatory diagram showing an internal functional configuration of a server,
FIG. 3 is an explanatory diagram showing an example of a database included in the system according to the first embodiment,
FIG. 4A is an explanatory diagram showing remote control of a vehicle performed by a remote control unit,
FIG. 4B is a flowchart showing a processing procedure of run control of the vehicle in the first embodiment,
FIG. 5 is a flowchart showing a method of manufacturing a vehicle executed by the system,
FIG. 6 is a flowchart showing a processing routine of a discharging process,
FIG. 7 is a flowchart showing a processing routine of a charging process,
FIG. 8 is an explanatory diagram showing an example of a database included in a system according to a second embodiment,
FIG. 9 is an explanatory diagram showing a configuration of the system according to the second embodiment,
FIG. 10 is an explanatory diagram showing a schematic configuration of a system according to a third embodiment,
FIG. 11 is an explanatory diagram showing an internal functional configuration of an ECU of the vehicle in the third embodiment,
FIG. 12 is a flowchart showing a processing procedure of run control of the vehicle in the third embodiment,
FIG. 13 is an explanatory diagram showing an internal functional configuration of a server in a fourth embodiment, and
FIG. 14 is an explanatory diagram showing an internal functional configuration of an ECU in the fourth embodiment.

### DETAILED DESCRIPTION

### A. First Embodiment:

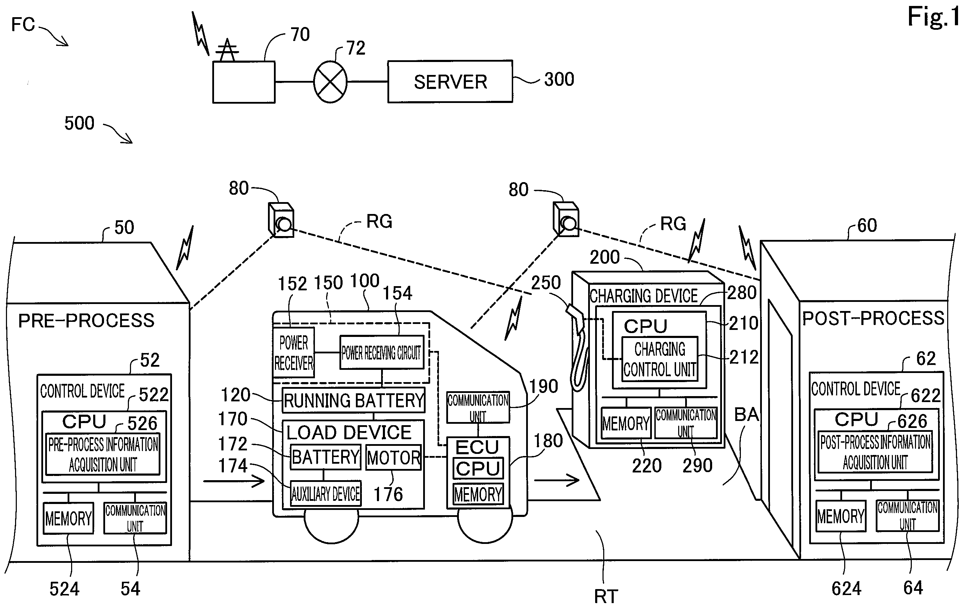

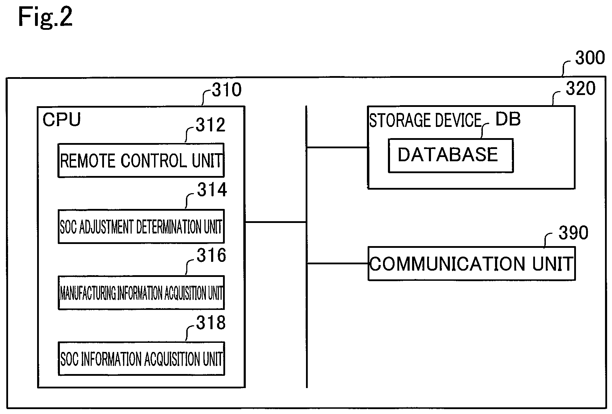

Referring to FIG. 1, together with FIGS. 2 to 4A as appropriate, the configuration of a system 500 according to a first embodiment will be described. FIG. 1 is an explanatory diagram showing a schematic configuration of the system 500 of the first embodiment. The system 500 of the present embodiment is configured as a remote automatic driving system. The system 500 is used in a factory FC that manufactures a vehicle 100 as a moving object and remotely controls the automatic driving of the vehicle 100 running in the factory FC in a manufacturing process of the vehicle 100. The factory FC is not limited to a single building or a plant existing at a single site or address, and may be present at a plurality of buildings, sites, addresses, etc., in each of which each process in the manufacturing process may be performed. The "vehicle 100 runs in the factory FC", as used herein, includes a case where the vehicle 100 runs between sites of the processes performed in a plurality of locations, for example, a case where the vehicle 100 runs on public roads existing between factories located at a plurality of locations, not limited to private roads, in order to move between the factories. Herein, completed vehicles as products and vehicles as semi-finished products or work-in-progress products in the manufacturing process are also collectively called the "vehicles 100".

In the present disclosure, the "moving object" means an object capable of moving, and is a vehicle or an electric vertical takeoff and landing aircraft (so-called flying-automobile), for example. The vehicle may be a wheeled vehicle or a tracked vehicle, and may be a passenger car, a truck, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. If the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The system 500 includes a charging device 200 and a server 300. The charging device 200 supplies, to the vehicle 100, power that has been supplied from an external power source, such as a system power source. The charging device 200 is a contact-type charging device that includes a charging connector 250, a charging controller 280, and a communication unit 290. In the present embodiment, the vehicle 100 is charged by an operator's manual operation of the charging device 200, for example, by manually connecting the charging connector 250 to the vehicle 100. The communication unit 290 is a wireless communication device for wireless communication with an external device such as the vehicle 100 or the server 300.

The charging controller 280 includes a computer equipped with a CPU 210 as a central processing unit and a memory 220 such as a RAM and ROM. When the CPU 210 executes a program stored in the memory 220, some or all of the functions of a charging control unit 212 and the like are implemented. The CPU 210, the memory 220, and the communication unit 290 are connected to each other via an internal bus or interface circuit.

The charging control unit 212 acquires, from the vehicle 100, information such as a current state of charge (SOC: State Of Charge) of a running battery 120 mounted on the vehicle 100, via the communication unit 290. When charging the running battery 120, the charging control unit 212 uses the acquired SOC and the like to adjust charging conditions, such as supplied charging power and charging time, so that they become suitable for the running battery 120. The charging control unit 212 is not limited only to acquiring the current SOC, but may also acquire, from the vehicle 100 or server 300, a target value of the SOC of the battery to be charged.

FIG. 2 is an explanatory diagram showing an internal functional configuration of the server 300. The server 300 includes a CPU 310 serving as a central processing unit, a storage device 320, and a communication unit 390, which are interconnected via an internal bus or interface circuit. The communication unit 390 is a circuit for communicating with the vehicle 100, the charging device 200, a pre-process management device 52, as well as a post-process management device 62, and the like via a network 72.

The storage device 320 is, for example, a RAM, ROM, hard disk drive (HDD), solid state drive (SSD), or the like. The storage device 320 stores various programs to implement the functions provided in the present embodiment. When the computer programs stored in the storage device 320 are executed by the CPU 310, the CPU 310 functions as a remote control unit 312, an SOC adjustment determination unit 314, a manufacturing information acquisition unit 316, and an SOC information acquisition unit 318. The storage device 320 stores a database DB as well as data acquired from the vehicle 100, each process, and the like.

The SOC information acquisition unit 318 functions as a state-of-charge acquisition unit to acquire the current SOC of the running battery 120 that is mounted on the vehicle 100. The SOC can be calculated, for example, using a cell voltage, current, and temperature of the running battery 120, detected by sensors (not shown) provided in the vehicle 100, as well as standard values of the running battery 120. The SOC may be estimated from an elapsed time after the last time of measuring the SOC, the running time and running distance of the vehicle 100, and the like, instead of an output value of the running battery 120.

The manufacturing information acquisition unit 316 acquires manufacturing information about each process in the factory FC. The "manufacturing information" includes, for example, start and completion times of processing in each process, vehicle identification information about the vehicle 100 present in each process, the number of work-in-process, the scheduled number of vehicles to be manufactured per day, and a target manufacturing time of the process to manufacture one vehicle 100. The target manufacturing time is sometimes referred to as a "tact time". The manufacturing information acquisition unit 316 acquires, for example, manufacturing information about a pre-process 50 from the pre-process management device 52 and manufacturing information about a post-process 60 from the post-process management device 62. The manufacturing information acquisition unit 316 may acquire the manufacturing information about each process from a production management system that integrates and manages the manufacturing information about each process in the factory FC.

The SOC adjustment determination unit 314 functions as a state-of-charge adjustment determination unit that determines whether or not to adjust the SOC of the running battery 120 of the vehicle 100 during running by comparing the SOC target value with the current SOC acquired by the SOC information acquisition unit 318.

The remote control unit 312 sends, to the vehicle 100 via the communication unit 390, a control signal requesting remote control of the vehicle 100. When the vehicle 100 receives the request for the remote control, driving control is implemented by an ECU 180, and as a result, the vehicle 100 is caused to automatically run.

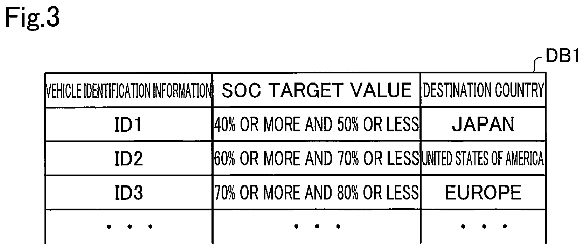

FIG. 3 is an explanatory diagram showing a database DB1, which is an example of the database DB included in the system 500 according to the first embodiment. The database DB1 is used to determine whether or not to execute the state-of-charge adjustment process.

As shown in FIG. 3, the SOC target value set for each vehicle identification information is indicated in the database DB1. The "vehicle identification information" refers to various information, based on which the SOC target value set for each vehicle 100 can be identified. The vehicle identification information includes, for example, ID information given to each vehicle 100, specification information on the vehicle 100 such as a vehicle type, color, and shape of the vehicle 100, and production management information such as a name of an in-process step of the vehicle 100. The vehicle identification information can be acquired, for example, from RF tags attached to the respective vehicles 100. The SOC target value can also be used as the vehicle identification information. In this case, the SOC target value can be acquired from the vehicle 100 without using the database DB. When a plurality of vehicles 100 set to have the same SOC target value is manufactured in a group, such as one lot at a time, the lot number or the like can also be used as the vehicle identification information. When the vehicle 100 can be identified from production management information or the like, the production management information may be used as the vehicle identification information, or the vehicle identification information may be time information such as an in-process time or processing completion time of each process of the vehicle 100. The vehicle identification information may also be location information about the vehicle 100 in the factory FC, such as coordinates on a track RT and coordinates in the factory FC.

As shown in FIG. 3, examples of a destination country and an SOC target value required for shipment to the destination country are set as examples for each of vehicle identification information ID1, ID2, and ID3 given for the respective vehicles 100. The "destination country" refers to a destination to which the manufactured vehicle 100 is shipped. The destination country can also be used as the vehicle identification information. When shipping to the destination country, it is preferable to set the SOC target value in consideration of an impact on the life-span of the running battery 120 if a transportation period is prolonged, for example, when the shipping by sea is used.

In the present embodiment, the SOC target value is set in a range of the lower limit value or more and the upper limit value or less. The lower limit can be set at any value, for example, 10%, 20%, 25%, 30%, 50%, etc. The upper limit value can be set at any value, such as 90%, 80%, 75%, 70%, 50%, etc. The lower limit value of the SOC target value to be used can be the lower specification limit (LSL) or higher in terms of the SOC quality management so as to suppress or prevent deterioration of the running battery 120 due to a reduction in the SOC. The upper limit of the SOC target value to be used may be the upper specification limit (USL) or lower in terms of the SOC quality management so as to suppress or prevent deterioration of the running battery 120 due to overcharging. The SOC target values are not limited to a numerical range and may be set using a specific numerical value. When the SOC target value is a specific numerical value, for example, when the current SOC is higher than the SOC target value or is lower than the SOC target value, the state-of-charge adjustment process is executed to bring the SOC closer to the SOC target value. The SOC target value to be used may be either the lower limit value or upper limit value. In this case, if the current SOC is less than the lower limit value, the state-of-charge adjustment process is executed such that the SOC becomes the lower limit value or more. On the other hand, if the current SOC is greater than the upper limit value, the state-of-charge adjustment process is executed such that the SOC becomes the upper limit value or less.

As shown in FIG. 1, examples of the vehicle 100 include various types of vehicles, such as passenger cars, trucks, buses, and construction vehicles. The vehicle 100 includes a communication unit 190, a power receiving device 150, the running battery 120, a load device 170, and an electronic control unit (ECU) 180.

The communication unit 190 is a wireless communication device mounted on the vehicle 100, such as a dongle, for example. The communication unit 190 transmits information, such as the SOC of the running battery 120, to the charging device 200 and the server 300. The communication unit 190 can perform communication using Controller Area Network (CAN) communication, which is used, for example, to control the vehicle 100. The CAN communication is a communication standard that allows transmission or reception in multiple directions. The mutual communication is performed between the vehicle 100 and the charging device 200 through the CAN communication. The communication unit 190 has a communication function of performing wireless communication with external devices outside the vehicle 100, such as the server 300 connected to the network 72 via an access point 70 in the factory FC. This allows mutual communication between the vehicle 100 and the server 300. The communication unit 190 may further use diagnostic communication. The diagnostic communication is a communication standard that allows for a one-to-one correspondence between the request and the response, and is used for diagnosing failures and the like.

The power receiving device 150 includes a power receiver 152 and a power receiving circuit 154. In the present embodiment, the power receiver 152 is a charging inlet that conforms to a connector standard corresponding to the charging connector 250 of the charging device 200. The power receiving circuit 154 is, for example, a rectifier and a DC/DC converter. When AC power is supplied from the power receiver 152, the power receiving circuit 154 converts the supplied AC power into DC power using the rectifier and supplies it to the running battery 120 as a load via the DC/DC converter. The rectifier and DC/DC converter may be provided in the charging device 200. In this case, the power receiving device 150 is supplied with DC power from the charging device 200.

The load device 170 is connected to the running battery 120. The load device 170 includes, for example, an auxiliary battery 172, an auxiliary device 174, and a motor 176. The auxiliary battery 172 is, for example, a 12 V battery, which is a lower voltage battery than the running battery 120. The battery 172 for the auxiliary device is used to drive the auxiliary device 174. The battery 172 for the auxiliary device is charged by being supplied with power from the running battery 120.

The auxiliary device 174 is electrically connected to the battery 172 for the auxiliary device and is driven using power from the battery 172 for the auxiliary device. Examples of the auxiliary device 174 include car audio systems, air conditioners, power windows, lights, door locks, windshield wipers, brakes, and car navigation systems. The auxiliary device 174 may be driven with power from the running battery 120.

The motor 176 is, for example, an AC synchronous motor and functions as an electric motor and generator. When the motor 176 functions as the electric motor, the motor 176 is driven with power stored in the running battery 120 as a driving source. The output of the motor 176 is transmitted to wheels via a speed reducer and axle. When the vehicle 100 is decelerating, the motor 176 functions as a generator that uses the rotation of the wheels to generate regenerative power.

The running battery 120 is a rechargeable secondary battery, for example, a lithium-ion battery or a nickel-metal hydride battery. The running battery 120 is a high-voltage battery with several hundred volts, for example, and stores power that is used for running the vehicle 100. When supplied with the power provided from the charging device 200 to the power receiving device 150 and with the regenerative power generated by the motor 176, the running battery 120 is charged, resulting in an increased SOC.

A Power Control Unit (PCU) (not shown) is electrically connected between the running battery 120 and the motor 176. The PCU has an inverter, a boost converter, and a DC/DC converter. The inverter converts the DC power supplied from the running battery 120 into AC power and supplies the converted AC power to the motor 176. The inverter converts the regenerative power supplied from the motor 176 into DC power and supplies it to the running battery 120. The boost converter boosts the voltage of the running battery 120 when the power stored in the running battery 120 is supplied to the motor 176. The DC/DC converter steps down the voltage of the running battery 120 when the power stored in the running battery 120 is supplied to the auxiliary device 174 or the like. The PCU may adjust the amount of regenerative power, which is to be supplied to the running battery 120, and then supply the adjusted regenerative power to the running battery 120.

The ECU 180 is mounted on the vehicle 100 and executes various controls of the vehicle 100. The ECU 180 functions as a driving control unit that executes the driving control of the vehicle 100 and an auxiliary control unit that drives the auxiliary device 174. The "driving control" includes, for example, adjustment of acceleration, speed, and steering angle. The ECU 180 includes a memory such as an HDD, an optical storage medium, or a semiconductor memory, and a CPU serving as a central processing unit. Various functions are implemented by causing the CPU to execute various computer programs stored in the memory. In the remote control, the ECU 180 controls respective actuators mounted on the vehicle 100 according to control signals for the remote control, received from the server 300 via the communication unit 190. The ECU 180 controls the transfer of power between the running battery 120 and the motor 176 by controlling the PCU. In the discharge process, the ECU 180 controls the discharge of the running battery 120 by driving the load device 170 as described below. In the charging process, the ECU 180 controls charging of the running battery 120 by controlling the power receiving circuit 154 of the power receiving device 150.

As shown in FIG. 1, the factory FC is equipped with a site for the pre-process 50, a site for the post-process 60, the track RT for the vehicle 100, a charging track BA that is continuous to the track RT, and a camera 80. The track RT connects the pre-process 50 with the post-process 60. The charging device 200 is installed on the charging track BA.

The pre-process 50 is, for example, an assembly process for assembling parts to the vehicle body. The pre-process 50 is not limited to the assembly process, and may employ various manufacturing processes as long as the vehicle 100 subjected to the pre-process 50 is allowed to run by the remote control. In the pre-process 50, the pre-process management device 52 is provided for managing the manufacturing information about the pre-process 50.

The pre-process management device 52 is an information processing unit that includes a CPU 522 serving as a central processing unit, a memory 524 such as a ROM or RAM, and a communication unit 54 for communication with the server 300. These are connected to each other via an internal bus or an interface circuit. When the CPU 522 executes a program stored in memory 524, some or all of the functions of a pre-process information acquisition unit 526 are implemented. The pre-process information acquisition unit 526 acquires manufacturing information about the vehicle 100 in the pre-process 50 from cameras, sensors, and the like, which are not shown in the figure, provided in the pre-process 50. The pre-process information acquisition unit 526 transmits the acquired manufacturing information about the vehicle 100 in the pre-process 50, to the server 300 via the communication unit 54.

The post-process 60 is, for example, an inspection process of the vehicle 100. The vehicle 100, which has been discharged from the pre-process 50 and become work-in-progress in the post-process 60, is fed into the post-process 60 once it gets permission to be fed into the post-process 60. After the inspection process is finished, the vehicles 100 are completed as products and run to a waiting area in the factory FC to wait for shipment. Thereafter, the vehicles 100 are shipped to the destination countries corresponding to the respective identification information about the vehicles 100. In the post-process 60, the post-process management device 62 is provided for managing the manufacturing information about the post-process 60.

The post-process management device 62 is an information processing unit that includes a CPU 622 serving as a central processing unit, a memory 624 such as a ROM or RAM, and a communication unit 64 for communication with the server 300. These are connected to each other via an internal bus or an interface circuit. When the CPU 622 executes a program stored in the memory 624, some or all of the functions of a post-process information processing unit 626 and the like are implemented. The post-process information processing unit 626 acquires manufacturing information about the vehicle 100 in the post-process 60 from sensors and the like, which are not shown in the figure, provided in the post-process 60. The post-process information processing unit 626 transmits the acquired manufacturing information about the vehicle in the post-process 60, to the server 300 via the communication unit 64.

The camera 80 is disposed between the sites of the pre-process 50 and post-process 60. The camera 80 is fixed in a position where it can capture images of the track RT, the charging track BA, and the running vehicle 100. The camera 80 acquires the images that enable the position of the vehicle 100 relative to the track RT and the charging track BA to be confirmed. The images captured by the camera 80 are used for the remote control of the vehicle 100 by means of the remote control unit 312. This configuration allows the vehicle 100 to execute the automatic driving through the remote control without using any detector mounted on the vehicle 100, such as a camera, millimeter wave radar, or LiDAR. However, a detector mounted on the vehicle 100 may be used as an aid so as to prevent collision during the remote control by means of the system 500.

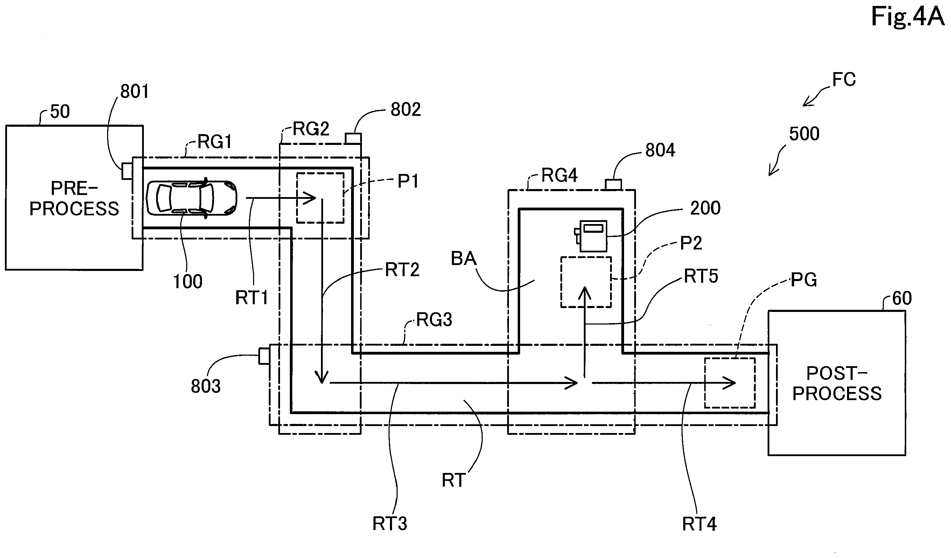

FIG. 4A is an explanatory diagram showing the remote control of the vehicle 100 performed by the remote control unit 312. In an example of FIG. 4A, the track RT includes a first track RT1, a second track RT2, a third track RT3, and a fourth track RT4. The first track RT1 and the second track RT2 are connected to each other via a right-angle curve. The charging track BA is connected between the third track RT3 and the fourth track RT4. The remote control unit 312 causes the vehicle 100 to run along the track RT to a feeding position PG, which leads to the post-process 60, during a normal operation when the charging process is not performed.

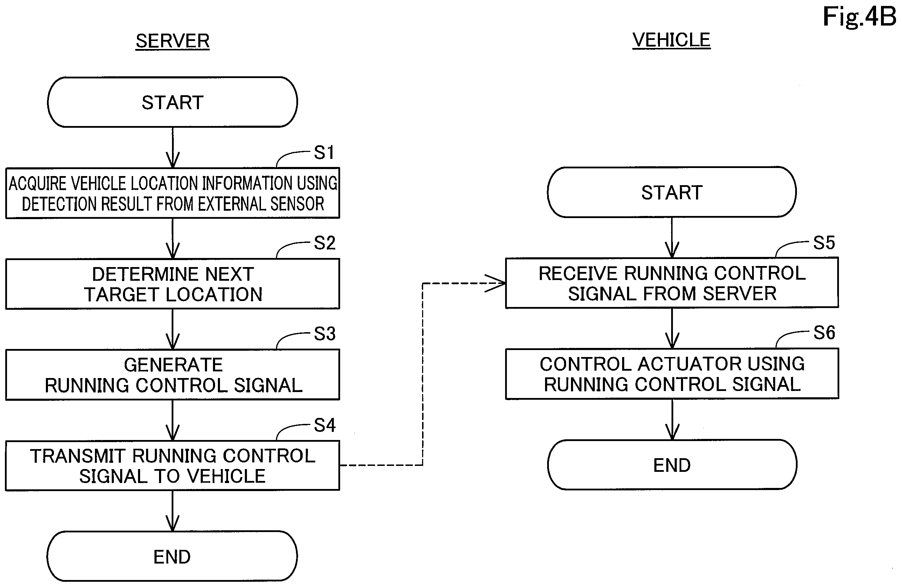

The camera 80 acquires the images of the vehicle 100 on the track RT and the charging track BA from above, as shown in FIG. 4A. The number of cameras 80 is set at the number that can capture images of the entire track RT and charging track BA in consideration of the angle of view of the cameras 80 and the like. In the example shown in FIG. 4, the cameras 80 include a camera 801 capable of capturing an image in a range RG1 covering the entirety of the first track RT1, a camera 802 capable of capturing an image in a range RG2 covering the entirety of the second track RT2, a camera 803 capable of capturing an image in a range RG3 covering the entirety of the third track RT3 and fourth track RT4, and a camera 804 capable of capturing an image in a range RG4 covering the entirety of the charging track BA. It is noted that the camera 80 may capture images not only from above but also from the front, back, and side of the vehicle 100. The cameras capturing these images may be arbitrarily combined.

In the track RT, a target route that the vehicle 100 should run is set in advance. The remote control unit 312 causes the ECU 180 to execute the driving control of the vehicle 100 while analyzing, at predetermined time intervals, images of the track RT and the vehicle 100 captured by the camera 80. The remote control unit 312 successively adjusts the position of the vehicle 100 relative to the target route, thus enabling the vehicle 100 to run along the target route. It is noted that the remote control may use an image of the entire vehicle 100, or an image of a portion of the vehicle 100, such as an alignment mark provided on the vehicle 100.

The angles of view of the cameras 80 corresponding to the respective tracks connected are configured to overlap each other at connection positions of the respective tracks such as a position P1 shown in FIG. 4A. In an example of the position P1, the angle of view of the camera 801 corresponding to the first track RT1 and the angle of view of the camera 802 corresponding to the second track RT2 overlap each other. The vehicle 100 discharged from the pre-process 50 runs to the position P1 through the remote control using the image captured by the camera 801. Upon reaching the position P1, the vehicle 100 starts running on the second track RT2 by switching to the remote control using the image captured by the camera 802 instead of the camera 801. Similarly, the images captured by the camera 803 are used for running on the third track RT3 and fourth track RT4, and the image captured by the camera 804 is used for running on the charging track BA. In this way, the remote control unit 312 performs the remote control of the vehicle 100 while appropriately switching the captured image, which is to be analyzed, for each range of the track RT.

FIG. 4B is a flowchart showing a processing procedure for running control of the vehicle 100 in the first embodiment. In step S1, the server 300 acquires vehicle location information using detection result output from an external sensor. The external sensor is located outside the vehicle 100. The vehicle location information is locational information as a basis for generating a running control signal. In the present embodiment, the vehicle location information includes the location and orientation of the vehicle 100 in a reference coordinate system of the factory FC. In the present embodiment, the reference coordinate system of the factory FC is a global coordinate system and a location in the factory FC can be expressed by X, Y, and Z coordinates in the global coordinate system. In the present embodiment, the external sensor is a camera that is disposed in the factory and outputs a captured image as detection result. In step S1, the server 300 acquires the vehicle location information using the captured image acquired from the camera 80 as the external sensor.

More specifically, in step S1, the server 300 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model using artificial intelligence, for example. The detection model is prepared in the system 500 or outside the system 500. The detection model is stored in advance in the storage device 320 of the server 300, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The server 300 can acquire the orientation of the vehicle 100 through estimation based on the direction of a motion vector of the vehicle 100 detected from change in location of a feature point of the vehicle 100 between frames of the captured images using optical flow process, for example.

In step S2, the server 300 determines a target location to which the vehicle 100 is to move next. In the present embodiment, the target location is expressed by X, Y, and Z coordinates in the global coordinate system. The storage device 320 of the server 300 contains a reference route stored in advance as a route along which the vehicle 100 is to run. The route is expressed by a node indicating a departure place, a node indicating a way point, a node indicating a destination, and a link connecting nodes to each other. The server 300 determines the target location to which the vehicle 100 is to move next using the vehicle location information and the reference route. The server 300 determines the target location on the reference route ahead of a current location of the vehicle 100.

In step S3, the server 300 generates a running control signal for causing the vehicle 100 to run toward the determined target location. In the present embodiment, the running control signal includes an acceleration and a steering angle of the vehicle 100 as parameters. The server 300 calculates a running speed of the vehicle 100 from transition of the location of the vehicle 100 and makes comparison between the calculated running speed and a target speed of the vehicle 100 determined in advance. If the running speed is lower than the target speed, the server 300 generally determines an acceleration in such a manner as to accelerate the vehicle 100. If the running speed is higher than the target speed as, the server 300 generally determines an acceleration in such a manner as to decelerate the vehicle 100. If the vehicle 100 is on the reference route, server 300 determines a steering angle and an acceleration in such a manner as to prevent the vehicle 100 from deviating from the reference route. If the vehicle 100 is not on the reference route, in other words, if the vehicle 100 deviates from the reference route, the server 300 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the server 300 transmits the generated running control signal to the vehicle 100. The server 300 repeats the acquisition of vehicle location information, the determination of a target location, the generation of a running control signal, the transmission of the running control signal, and others in a predetermined cycle.

In step S5, the driving controller of the vehicle 100 receives the running control signal transmitted from the server 300. In step S6, the vehicle 100 controls an actuator of the vehicle 100 using the received running control signal, thereby causing the vehicle 100 to run at the acceleration and the steering angle indicated by the running control signal. The vehicle 100 repeats the reception of a running control signal and the control over the actuator in a predetermined cycle. According to the system 500 in the present embodiment, it becomes possible to move the vehicle 100 without using a transport unit such as a crane or a conveyor.

In the remote control of the vehicle 100, the system 500 acquires the SOC target value for each vehicle 100 using the database DB1 shown in FIG. 3, and determines whether or not to adjust the SOC using the acquired SOC target value and the current SOC of the running battery 120. More specifically, when the SOC adjustment determination unit 314 determines that the SOC is to be adjusted, the remote control unit 312 remotely controls the vehicle 100 to execute the state-of-charge adjustment process. The state-of-charge adjustment process includes the discharging process, the charging process, a discharging suppression process, and a charging suppression process.

The "discharging process" is a process for discharging the running battery 120 to reduce the SOC. The discharging process includes driving of the load device 170. The discharging process can adjust the power consumption of the running battery 120 depending on the way of using the load device 170. For example, as the power consumption required when accelerating the vehicle 100 is generally significant, the adjustment of the acceleration of the vehicle 100 is suitable for the discharging process. The discharging process also includes the power consumption of the battery 172 for the auxiliary device due to the driving of the auxiliary device 174. For example, the power consumption of the vehicle 100 during running can be increased by turning on the auxiliary device 174, such as an audio device or an air conditioner, which is not scheduled to be used while the vehicle 100 is running in the manufacturing process. When a connection between the motor 176 and drive wheels can be disconnected by having a clutch in the vehicle 100, the discharging may be performed by increasing the speed of the motor 176 while the connection between the motor 176 and the drive wheels is disconnected. In a case where the vehicle 100 includes a transmission, the discharging may be performed by, for example, switching to a gear ratio that is inefficient for the speed of the vehicle 100 to thereby increase the power consumption. It is noted that instead of the discharging process, the discharging of the running battery 120 may be executed by a manual discharging operation in which the running battery 120 is discharged manually by the operator, such as by an operator's manual operation of the load device 170. When the manual discharging operation is performed, the SOC adjustment determination unit 314 further notifies the operator or the like so as to encourage the operator to perform the manual discharging operation.

The "charging process" is a process for charging the running battery 120 to increase the SOC. The charging process includes, for example, supply of regenerative power from the motor 176 to the running battery 120, supply of power from the charging device 200 to the running battery 120, and the like. The "supply of power from the charging device 200 to the running battery 120" includes a state in which the vehicle 100 can be automatically charged by the charging device 200 by the control of each unit of the system 500, and a state in which the vehicle 100 can be manually charged using the charging device 200 by the operator or the like. The "state in which the vehicle 100 can be automatically charged" includes a state in which the vehicle 100 moves and is then automatically charged from the charging device 200, and a state in which the vehicle 100 is automatically charged from the charging device 200 without moving. The "state in which the vehicle 100 can be manually charged" includes a state in which the vehicle 100 moves to a position where the charging of the vehicle 100 can be performed manually using the charging device 200, thereby making the manual charging operation implementable by the operator, and a state in which the manual charging operation is implementable by the operator without moving the vehicle 100. When the manual charging operation is performed, the SOC adjustment determination unit 314 further notifies the operator or the like so as to encourage the operator to perform the manual charging operation. It is noted that neither the manual discharging operation nor the manual charging operation may be performed, or that either of them may be performed.

In the present embodiment, the remote control unit 312 causes the vehicle 100 to run on the charging track BA by the remote control, allowing the vehicle 100 to be brought into a state of being manually charged. More specifically, the remote control unit 312 causes the vehicle 100 to run to a position P2 where the operator can manually charge the vehicle 100 by using the charging device 200 as shown in FIG. 4A. In addition, the SOC adjustment determination unit 314 may notify an operator or the like responsible for manual charging of the vehicle 100 with the charging device 200 to encourage the operator to manually supply power to the vehicle 100. The notification may be executed, for example, by a display screen such as a display of the post-process management device 62 or by sound or the like through a speaker mounted on the charging device 200 or the vehicle 100.

The "discharging suppression process" is a process for suppressing the discharging of the running battery 120 to suppress a reduction in the SOC. The discharging suppression process includes, for example, a reduction in the acceleration of the vehicle 100 during running, a reduction in the running speed thereof, an increase in cruising distance of the distance planned for the vehicle to run, and the like. The "charging suppression process" is a process for suppressing the charging of the running battery 120 to suppress an increase in the SOC. The charging suppression process includes, for example, a reduction in the amount of regenerative power, a reduction in the amount of regenerative power supplied to the running battery 120, and the like. The amount of regenerative power can also be adjusted, for example, by the number of times the vehicle 100 is decelerated, the power generation efficiency using the motor 176, or the like.

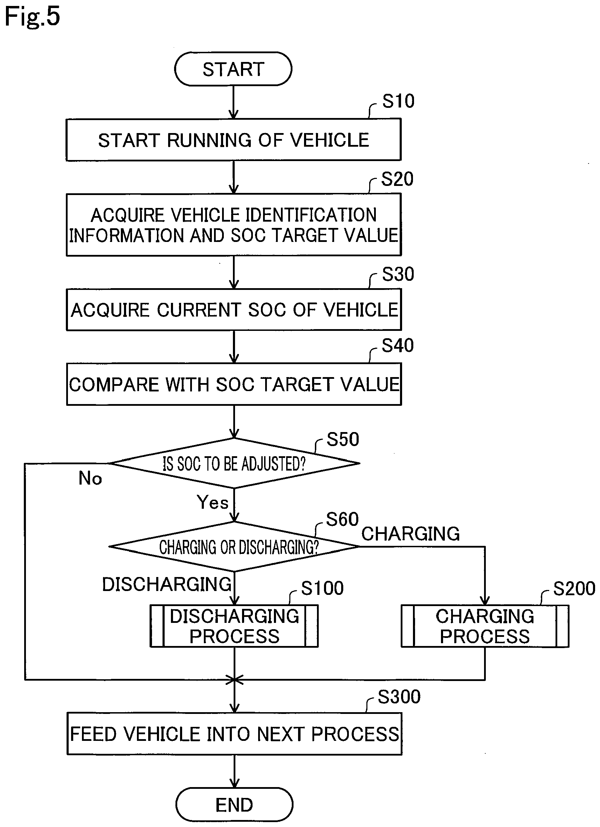

FIG. 5 is a flowchart showing a method of manufacturing the vehicle 100 executed by the system 500 according to the present embodiment. The flow shown in FIG. 5 is started by manufacturing information acquisition unit 316 having detected completion of the process in the pre-process 50 or feeding request from the post-process 60 to feed the vehicle 100.

In step S10, the remote control unit 312 causes the vehicle 100 to run toward the site of the post-process 60 by the remote control. In step S20, the vehicle identification information and SOC target value of the vehicle 100 are acquired. For example, the manufacturing information acquisition unit 316 acquires, from the pre-process management device 52, the vehicle identification information as the manufacturing information about the vehicle 100 that has been subjected to the process in the pre-process 50. The SOC adjustment determination unit 314 acquires the SOC target value corresponding to the acquired vehicle identification information by referring to the database DB1. In the present embodiment, a description will be given by using, as an example, the vehicle 100 with vehicle identification information ID2 shown in FIG. 3.

In step S30, the SOC information acquisition unit 318 acquires, via the communication unit 390, the current SOC of the running battery 120 that is mounted on the vehicle 100. The SOC information acquisition unit 318 may repeatedly acquire the current SOC at predetermined intervals, for example, every few seconds, while the vehicle 100 is running up to the site of the post-process 60. It is noted that the SOC may be acquired only at predetermined timing, for example, when the vehicle is discharged from the site of the pre-process 50. The charge rate adjustment process to adjust the SOC is preferably executed while the vehicle 100 is running from the perspective of improving efficiency. Therefore, the SOC is preferably acquired at or before the timing when the vehicle 100 starts running.

In step S40, the SOC adjustment determination unit 314 compares the acquired current SOC with the SOC target value. In step S50, the SOC adjustment determination unit 314 determines whether or not to adjust the SOC in the vehicle 100 by using the comparison result. Specifically, if the current SOC is within the range of the SOC target values (S50: NO), the SOC adjustment determination unit 314 determines that the state of charge is not to be adjusted, and the operation proceeds to step S300. In step S300, the remote control unit 312 causes the vehicle 100 to run by the remote control and to be fed into the site of the post-process 60. The remote control unit 312 moves the vehicle 100 to a position from which it can be delivered to the site of the post-process 60, and then the process is ended. In this case, the SOC in the vehicle 100 is not adjusted.

If the current SOC is outside the range of the SOC target values (S50: YES), the SOC adjustment determination unit 314 determines that the state of charge is to be adjusted, and proceeds to a process in step S60, followed by execution of the state-of-charge adjustment process. In step S60, the SOC adjustment determination unit 314 determines whether to execute either the discharging process for discharging the running battery 120 by the remote control of the vehicle 100 or the charging process for charging the running battery 120 by the remote control of the vehicle 100. Specifically, the SOC adjustment determination unit 314 determines that the discharging process is to be executed if the current SOC is greater than the upper limit of the SOC target value (S60: Discharge). The SOC adjustment determination unit 314 proceeds to a process in step S100, in which it executes the discharging process. The SOC adjustment determination unit 314 determines that the charging process is to be executed if the current SOC is smaller than the lower limit of the SOC target value (S60: Charge). The SOC adjustment determination unit 314 proceeds to a process in step S200, in which it executes the charging process.

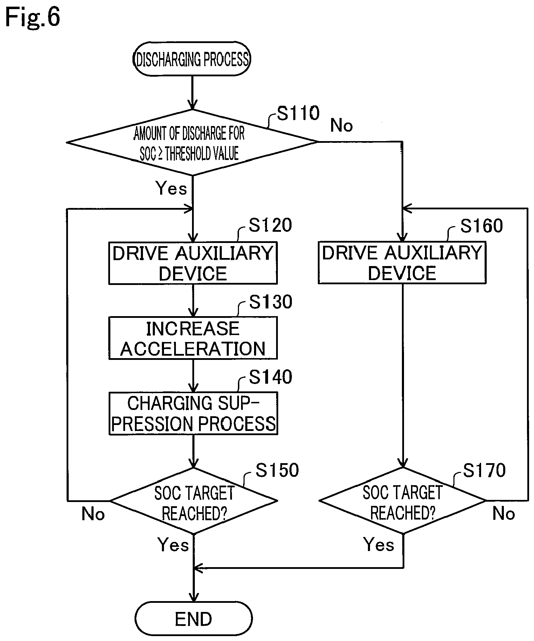

FIG. 6 is a flowchart showing a processing routine of the discharging process. In step S110, the SOC adjustment determination unit 314 calculates the amount of discharge required to bring the SOC into the range of the SOC target values. The SOC adjustment determination unit 314 confirms whether the calculated amount of discharge is greater than or equal to a predetermined threshold value, such as 20% for example. The threshold value is used as a criterion for determining whether the amount of discharge is large or not. If the calculated amount of discharge is less than the threshold value (S110: NO), the SOC adjustment determination unit 314 proceeds to a process in step S160.

In step S160, the remote control unit 312 drives the auxiliary device 174 to consume power stored in the battery 172 for the auxiliary device, or the running battery 120. For example, the remote control unit 312 turns on the auxiliary device 174 such as the audio device or the air conditioner while the vehicle 100 is running. As a result, the running battery 120 consumes more power than during the normal running of the vehicle 100. The remote control unit 312 may further adjust the power consumption of the running battery 120 by adjusting the power consumption of the auxiliary device 174, such as adjusting the sound volume of the audio device or the temperature of the air conditioner. Any device other than the audio device and the air conditioner may be used as the auxiliary device 174.

In step S170, the SOC adjustment determination unit 314 confirms whether or not the running battery 120 has been discharged before the SOC of the battery 120 is brought into the range of the SOC target values. Specifically, the SOC adjustment determination unit 314 acquires the current SOC through the SOC information acquisition unit 318 and compares the acquired current SOC with the SOC target value. If the acquired SOC is not within the range of the SOC target values (S170: NO), the process returns to step S160. If the SOC is within the range of the SOC target values (S170: YES), the process ends. If the SOC is not within the range of the SOC target values while the vehicle 100 is running, i.e., before the vehicle 100 reaches the feeding position PG, the remote control unit 312 may continue a charging adjustment process until the SOC target value is reached in a state in which the vehicle 100 is temporarily stopped to wait for being fed into the site of the post-process 60. The position at which the vehicle 100 is waiting may be the feeding position PG with respect to the site of the post-process 60, the position P2 on the charging track BA, or any position on the track RT as shown in FIG. 4A. The discharging process may be ended when the vehicle 100 arrives at the feeding position PG with respect to the site of the post-process 60 even if the SOC target value is not reached. In this case, the SOC target value is reached by adjusting the SOC at or after the post-process 60.

In step S110, if the calculated discharge amount is greater than or equal to the threshold value (S110: YES), the SOC adjustment determination unit 314 proceeds to a process in step S120. In step S120, the discharging process is executed to achieve a discharge amount greater than in step S160. In step S120, the same processing as in step S160 above is performed. In step S130, the remote control unit 312 increases the acceleration of the vehicle 100 during running. The acceleration is increased to the extent that can ensure the safety of the running of the vehicle 100. The acceleration can include both positive and negative accelerations. That is, the remote control unit 312 increases the acceleration of the vehicle 100 at the start of departure from the site of the pre-process 50 by a so-called sudden start, compared to the normal running, and increases the deceleration of the vehicle 100 at the stop of arrival at the site of the post-process 60 by a so-called sudden stop, compared to the normal running. The remote control unit 312 may also increase the number of times the vehicle 100 is accelerated and decelerated during running from the site of the pre-process 50 to the site of the post-process 60. As a result, the running battery 120 consumes more power than during the normal running of the vehicle 100.

In step S140, the remote control unit 312 further executes the charging suppression process for suppressing the charging of the running battery 120. Specifically, the remote control unit 312 causes the ECU 180 to control the PCU to reduce the amount of regenerative power supplied from the motor 176 to the running battery 120. By suppressing the charging of the running battery 120, the SOC of the running battery 120 can be reduced at an earlier stage.

In step S150, the SOC adjustment determination unit 314 confirms whether or not the SOC of the running battery 120 is within the range of the SOC target values, as in step S170. If the SOC is outside the range of the SOC target values (S150: NO), the process returns to step S120. If the SOC is within the range of the SOC target values (S150: YES), the process is ended.

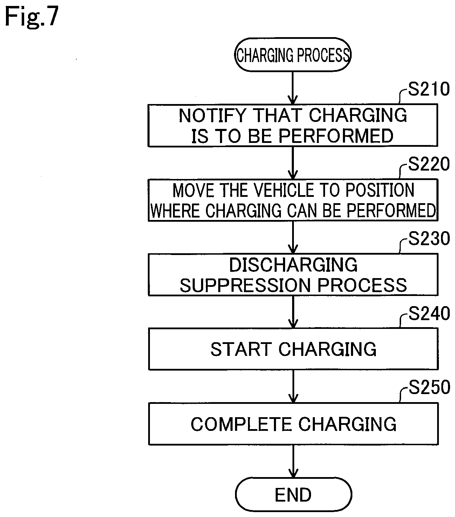

FIG. 7 is a flowchart showing a processing routine of the charging process. In step S210, the SOC adjustment determination unit 314 notifies the operator, who executes the manual charging with the charging device 200, of the determination result that the charging process is to be executed. In step S220, the remote control unit 312 causes the vehicle 100 to run to the position P2 on the charging track BA where the manual charging can be performed using the charging device 200 as shown in FIG. 4A.

In step S230, the remote control unit 312 further executes the discharging suppression process for suppressing the discharging of the running battery 120. Specifically, the remote control unit 312 reduces the acceleration, acceleration frequency, and run speed when the vehicle 100 is running toward the charging device 200. This can suppress a reduction in the SOC while the vehicle 100 is running toward the charging device 200. Therefore, the amount of charging performed by the charging device 200 can be reduced, and the time of charging performed by the charging device 200 can be shortened.

In step S240, the operator connects the charging connector 250 of the charging device 200 to the power receiver 152 of the vehicle 100 that has arrived at the position P2, and the operator then starts manual charging of the running battery 120. In step S250, the operator charges the battery until the SOC is within the range of the SOC target values and then completes the charging operation. The charging control unit 212 may acquire the SOC from the vehicle 100 via the CAN communication and adjust the charging amount based on the acquired SOC. When the charging is completed, the remote control unit 312 causes the vehicle 100 to move to the feeding position PG with respect to the site of the post-process 60 and ends its processing.

As described above, according to the system 500 of the present embodiment, the SOC adjustment determination unit 314 acquires the SOC target value of the running battery 120, and determines whether or not to adjust the current SOC of the running battery 120 by using the acquired SOC target value and the current SOC of the running battery 120. When the SOC adjustment determination unit 314 determines that the SOC is to be adjusted, the remote control unit 312 executes the state-of-charge adjustment process, including the discharging process for discharging the running battery 120 and the charging process for charging the running battery 120, by the remote control of the vehicle 100, thereby bringing the SOC closer to the SOC target value. According to the system 500 of the present embodiment, the charging or discharging of the running battery 120 can be executed when the vehicle 100 is driven through the remote control, thereby adjusting the SOC to the SOC target value. Therefore, in the manufacturing process of the vehicle 100 utilizing the driving through the remote control, the SOC of the running battery 120 can be managed to be an appropriate value.

According to the system 500 of the present embodiment, the remote control unit 312 adjusts the acceleration of the vehicle 100 when the vehicle 100 runs in the factory FC, as the state-of-charge adjustment process. The SOC of the running battery 120 can be adjusted suitably by adjusting the acceleration, which significantly affects the power consumption.

According to the system 500 of the present embodiment, the remote control unit 312 increases the acceleration of the vehicle 100 during running, as the discharging process. Therefore, the running battery 120 can be discharged at an early stage compared to during the normal running.

According to the system 500 of the present embodiment, the remote control unit 312 drives the auxiliary device 174 that consumes the power of the running battery 120 as the discharging process, thereby increasing the power consumption of the auxiliary device 174. The impact of adjustment of the SOC on the running of the vehicle 100 can be reduced by using the load device 170 different from the motor 176 to perform the discharging process.

According to the system 500 of the present embodiment, the remote control unit 312 causes the vehicle 100 to move to the position P2 where the charging device 200 can perform charging of the running battery 120, as the charging process. Therefore, even when the charging device 200 is disposed at a location apart from the track RT, the charging process of the vehicle 100 can be simplified by the automation of movement of the vehicle 100 to the charging device 200.

According to the system 500 of the present embodiment, the remote control unit 312 further executes the discharging suppression process for suppressing the discharging of the running battery 120 and the charging suppression process for suppressing the charging of the running battery 120, in the state-of-charge adjustment process. The time required to adjust the SOC through the discharging and charging processes can be shortened by suppressing the charging during the discharging process and also suppressing the discharging during the charging process.

According to the system 500 of the present embodiment, the remote control unit 312 executes the reduction in the acceleration and the number of times the vehicle 100 is accelerated when the vehicle 100 runs in the factory FC, as the discharging suppression process. The SOC of the battery 120 for the vehicle 100 during running can be suppressed suitably by reducing the acceleration, which may significantly affect the power consumption.

According to the system 500 of the present embodiment, the remote control unit 312 reduces the amount of regenerative power of the vehicle 100, as the charging suppression process. Therefore, an increase in the SOC can be suppressed while the vehicle 100 is running. The amount of discharging in the discharging process can be reduced, and the discharging time thereof can be shortened, by suppressing the charging during the discharging process.

According to the system 500 of the present embodiment, the SOC target value is set using the state of charge required when the vehicle 100 is shipped. Therefore, the SOC of the running battery 120 at the time of shipment can be adjusted to an appropriate value for each destination country.

### B. Second Embodiment:

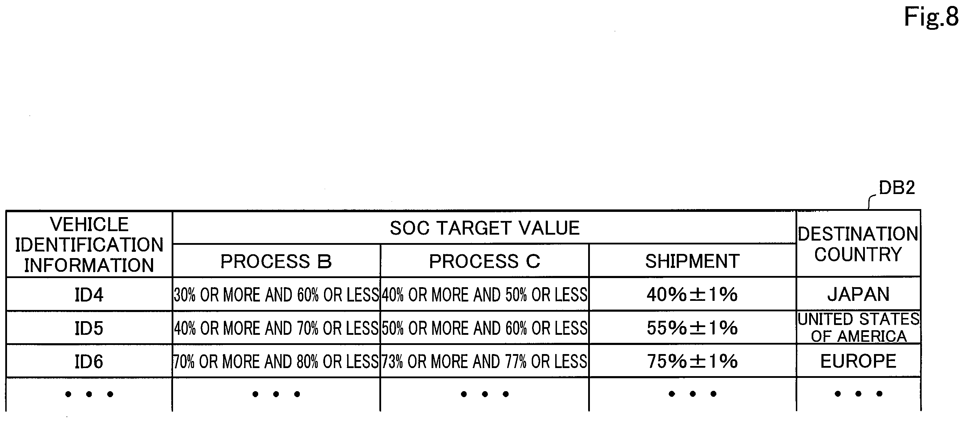

FIG. 8 is an explanatory diagram showing a database DB2. The database DB2 is an example of the database DB included in the system 500 according to a second embodiment. In the first embodiment described above, an example is described in which only the SOC target value required at the time of shipment is indicated in the database DB1. In contrast, in the present embodiment, as shown in FIG. 8, the database DB2 differs from the database DB1 in that the SOC target values are set for the respective processes from the process B to the time of shipment.

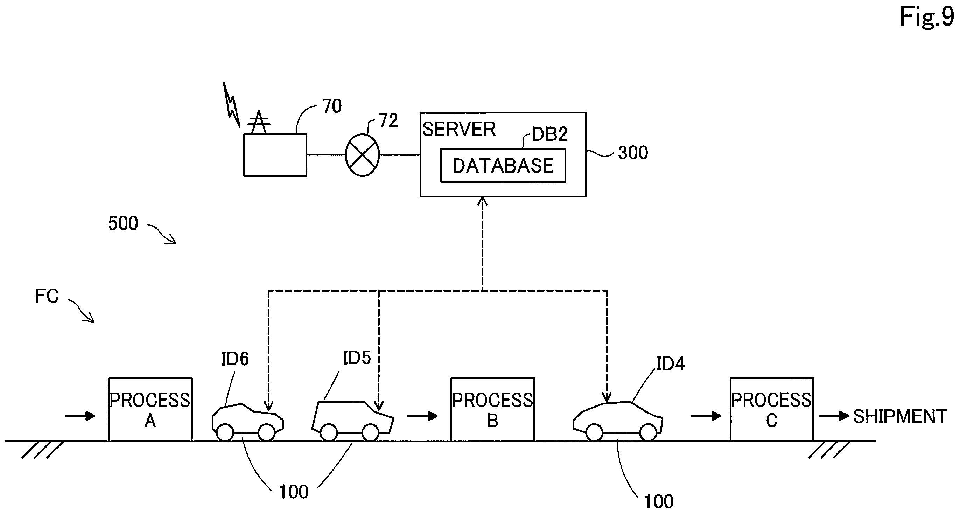

FIG. 9 is an explanatory diagram showing a configuration of the system 500 according to the second embodiment. The system 500 of the second embodiment differs from the system 500 of the first embodiment in that the database DB2 is stored in the server 300, but except for that, the system 500 of the second embodiment has a configuration similar to that of the first embodiment. In the example of FIG. 9, the remote control unit 312 individually executes the remote control and the state-of-charge adjustment process for each vehicle 100 of the vehicle identification information ID4, ID5, and ID6 to achieve the SOC target value for each process.

As shown in FIG. 8, the database DB2 has the SOC target values set therein. These SOC target values are those required, for example, at the respective timings, i.e., the timing of the in-process of the process B, the timing of the in-process of the process C, and the timing of shipment to the destination country, for the vehicles 100 of the vehicle identification information ID4, ID5, and ID6 shown in FIG. 9, respectively. The SOC target values for each process are set to cover a numerical range with the upper and lower limits. The numerical range of the SOC target values is set to become narrower step by step toward the time of shipment. This configuration makes it possible to reduce variations in the amount of charging/discharging of the SOC, which is to be adjusted between the respective processes. In a case where the SOC is adjusted only at the time of shipment, the amount of adjustment of the SOC may become excessive. In contrast, by adjusting the SOC step by step, the adjustment accuracy of the SOC at the time of shipment can be improved compared to a case where the SOC is adjusted only at the time of shipment.

As described above, according to the system 500 of the second embodiment, the SOC target value is set for each process in the manufacturing process. According to the system 500 of the present embodiment, the adjustment accuracy of achieving the final SOC target value can be improved by adjusting the SOC step by step for each process.

### C. Third Embodiment:

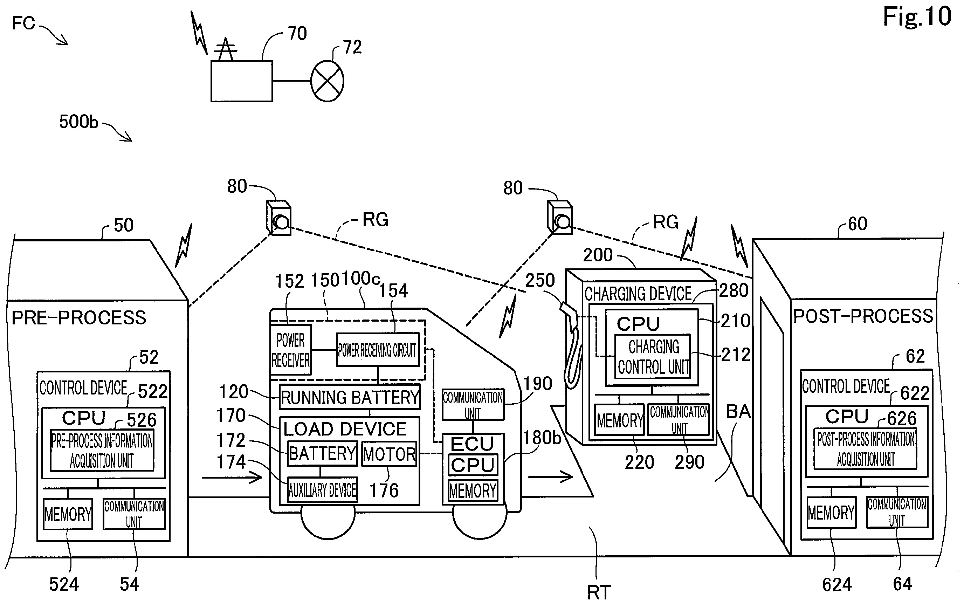

FIG. 10 is an explanatory diagram showing a schematic configuration of a system 500b according to a third embodiment. In the present embodiment, the system 500b differs from the first embodiment in that it does not include the server 300. Other configurations of the system 500b are the same as those of the first embodiment unless otherwise described.

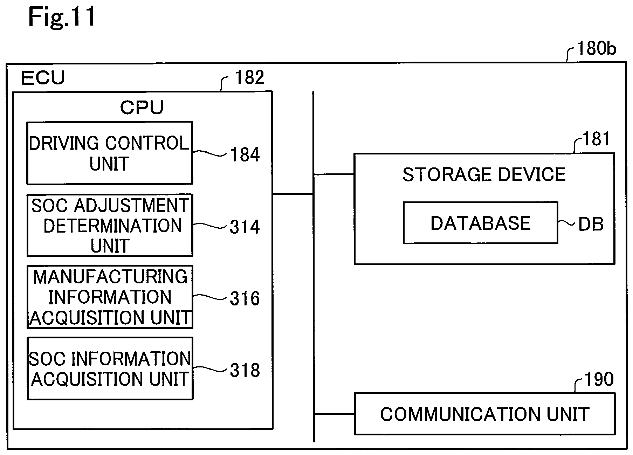

FIG. 11 is an explanatory diagram showing an internal functional configuration of an ECU 180b of a vehicle 100c in the third embodiment. As illustrated in FIG. 10, the ECU 180b includes a CPU 182 as a central processing unit, a storage device 181 such as a ROM and a RAM, and a communication unit 190 connected to an interface circuit not shown. These are connected via an internal bus to enable bidirectional communication with each other. The storage device 181 in the present embodiment has a database DB stored therein. The CPU 182 executes various programs stored in the storage device 181, thereby implementing various functions including the functions as a driving control unit 184, an SOC adjustment determination unit 314, a manufacturing information acquisition unit 316, and an SOC information acquisition unit 318. As described below, the driving control unit 184 in the present embodiment enables the vehicle 100c to run by autonomous control for the vehicle 100c.

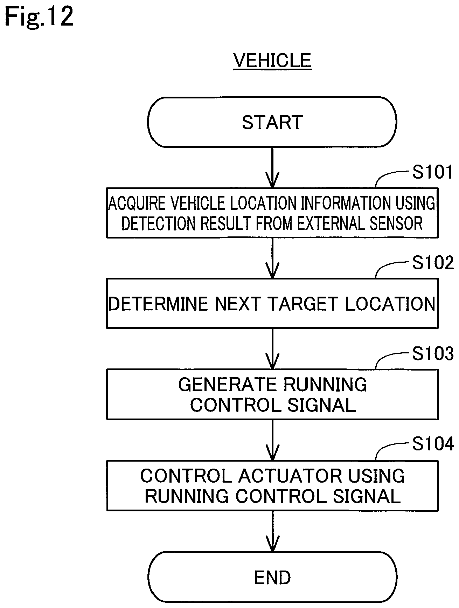

FIG. 12 is a flowchart showing a processing procedure of run control of the vehicle 100c in the third embodiment. In step S101, the vehicle 100c acquires vehicle location information about the vehicle 100c using detection result output from the camera 80 as an external sensor. In step S102, the vehicle 100c determines a target location to which the vehicle 100 is to move next. In step S103, the vehicle 100c generates a running control signal for causing the vehicle 100c to run to the determined target location. In step S104, the vehicle 100c controls an actuator using the generated running control signal, thereby causing the vehicle 100c to run by following a parameter indicated by the running control signal. The vehicle 100c repeats the acquisition of vehicle location information, the determination of a target location, the generation of a running control signal, and the control over the actuator in a predetermined cycle. According to the running control in the present embodiment, it is possible to cause the vehicle 100c to run by autonomous control without controlling the vehicle 100 remotely using the server 300.

In the present embodiment, each process in each of the flowcharts shown in FIGS. 5 to 7 is executed by the ECU 180b of the vehicle 100c. Specifically, in step S10 shown in FIG. 5, the driving control unit 184 causes the vehicle 100c to run toward the site of the post-process 60 by the autonomous control. In step S300, the driving control unit 184 causes the vehicle 100c to run by the autonomous control and feeds the vehicle 100c to the site of the post-process 60. Steps S20 to S60 are executed by the ECU 180b of the vehicle 100c, as in the first embodiment.

In step S130 of FIG. 6, the driving control unit 184 increases the acceleration of the vehicle 100c while it is running. In step S140, the driving control unit 184 executes a charge suppression process. Specifically, the driving control unit 184 controls the PCU to reduce the amount of regenerative power supplied from the motor 176 to the running battery 120. Steps S110, S120, S150 and S170 in FIG. 6 are executed by the ECU 180b of the vehicle 100c, as in the first embodiment.

In step S220 of FIG. 7, the driving control unit 184 causes the vehicle 100c to run to the position P2 on the charging track BA by the autonomous control. In step S230, the driving control unit 184 executes the discharge suppression process. Step S210 is executed by the ECU 180b of the vehicle 100c, as in the first embodiment. When charging is completed in step S240, the driving control unit 184 moves the vehicle 100c to the feeding position PG and ends the process.

As described above, according to the system 500b of the present embodiment, when the vehicle 100c is driven by the autonomous control, the charging and discharging of the running battery 120 can be executed to adjust the SOC target value. Therefore, the SOC of the running battery 120 can be managed at an appropriate value during the manufacturing process of the vehicle 100c using driving by the autonomous control. In addition, in the present embodiment, the SOC adjustment determination unit 314 of the vehicle 100c determines whether or not to adjust the state of charge, so that the vehicle 100c can determine by itself whether or not the state of charge should be adjusted.

### D. Fourth Embodiment:

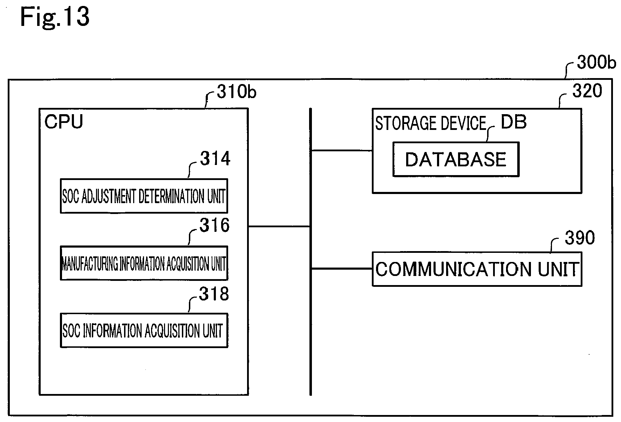

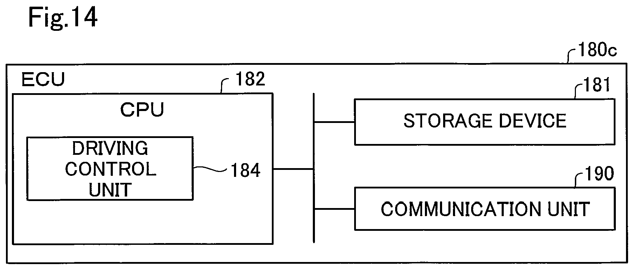

FIG. 13 is an explanatory diagram showing an internal functional configuration of a server 300b in a system 500 of a fourth embodiment. FIG. 14 is an explanatory diagram showing an internal functional configuration of an ECU 180c in the system 500 of the fourth embodiment. In the present embodiment, the CPU 310b of the server 300b does not function as the remote control unit 312, unlike the first embodiment. Also, in the present embodiment, unlike the fourth embodiment, the ECU 180c does not function as the SOC adjustment determination unit 314, the manufacturing information acquisition unit 316, and the SOC information acquisition unit 318. Specifically, in the present embodiment, the CPU 310b of the server 300b functions as the SOC adjustment determination unit 314, the manufacturing information acquisition unit 316, and the SOC information acquisition unit 318, as in the first embodiment. The ECU 180c functions as the driving control unit 184, as in the fourth embodiment. Other configurations of the system 500 in the fourth embodiment are the same as those in the first embodiment unless otherwise described.

In the present embodiment, the vehicle 100 runs by autonomous control for the vehicle 100 by executing the run control illustrated in FIG. 12, as in the third embodiment. In the present embodiment, steps S10 and S300 in FIG. 5 are executed by the driving control unit 184, as in the third embodiment. Meanwhile, steps S20 to S60 in FIG. 5 are executed by the CPU 310b of the server 300b, as in the first embodiment. Also, steps S130 and S140 in FIG. 6 are executed by the driving control unit 184, as in the third embodiment. Further, steps S110, S120, S150 and S170 in FIG. 6 are executed by the CPU 310b, as in the first embodiment. Steps S220 and S230 in FIG. 7 are executed by the driving control unit 184, as in the third embodiment. Meanwhile, step S210 is executed by the CPU 310b, as in the first embodiment. When charging is completed in S240, the driving control unit 184 moves the vehicle 100c to the feeding position PG, as in the third embodiment, and ends the process. In step S60 of the present embodiment, the CPU 310b may transmit information indicating that the discharging process is to be executed to the vehicle 100 when it is determined that the discharging process is to be executed. In step S110 of the present embodiment, the CPU 310b may transmit, to the vehicle 100, information indicating that the processes of steps S120 to S140 are to be executed or information indicating that the process of step S160 is to be executed, depending on the result of the determination about whether or not the amount of discharge is not less than the threshold value. In step S60 of the present embodiment, the CPU 310b may transmit, to the vehicle 100, information indicating that the charging process is to be executed, for example, when it is determined that the charging process is to be executed. In this case, the ECU 180c of the vehicle 100 can uses, as a trigger, such information transmitted from the server 300b to execute each process in the discharging process and each process in the charging process.

As described above, according to the system 500 of the fourth embodiment, as in the third embodiment, when the vehicle 100c is driven by the autonomous control, the charging and discharging of the running battery 120 can be executed to adjust the SOC target value.

Each component of the second embodiment may be applied to other embodiments in which the vehicle 100 runs by the autonomous control as in the third and fourth embodiments.

### E. Other embodiments:

(E1) The first embodiment above has described an example in which the charging device 200 is a contact-type charging device. In contrast, the charging device 200 may be a contactless power supply device that performs contactless power transmission using magnetic field resonance coupling (magnetic field resonance) onto the power receiving device mounted on the vehicle 100. In this case, the charging device 200 is laid on, for example, part or all of the track RT and performs the contactless power transmission on the vehicle 100 running on the track RT. In other words, the charging device 200 can automatically supply power to the vehicle 100 without causing the vehicle 100 to move to other locations different from the track RT. The term "vehicle 100 during running" means a state in which the vehicle 100 is located on the track RT in running, and includes not only a state in which the vehicle 100 is actually running at any speed greater than zero, but also a state in which the vehicle 100 is stopped on the track. With this configuration, for example, the vehicle 100 that is running from the site of the pre-process 50 to the site of the post-process 60 by the remote control can be charged, thereby efficiently adjusting the SOC of the running battery 120. Thus, the SOC of the running battery 120 can be adjusted to a predetermined value while suppressing or preventing a reduction in the production efficiency. The charging device 200 as a contactless power supply device is not limited to being installed on part or all of the track RT, but may be installed at other locations different from the track RT, such as the position P2 in FIG. 1. In this case, power is automatically supplied from a charging device 200b to a vehicle 100 by moving the vehicle 100 through the remote control to the position where the charging device 200 is provided as the contactless power supply device. In this configuration, the "charging process" includes not only bringing the vehicle 100 into a state of being ready for charging by means of contactless power supply, but also actually performing the charging.

(E2) Each embodiment above has described an example in which the remote control unit 312 is capable of performing both the discharging and charging processes. In contrast, the remote control unit 312 may execute only one of the discharging process and the charging process. Similarly, the driving control unit 184 may execute only one of the discharging process and the charging process.

(E3) Each embodiment above has described an example in which the remote control unit 312 is capable of executing both the charging suppression and discharging suppression processes. In contrast, the remote control unit 312 may execute either the charging suppression process or the discharging suppression process, or may be configured to execute neither the charging suppression process nor the discharging suppression process. In addition, similarly, the driving control unit 184 may execute only one of the charging suppression process and the discharging suppression process, or may be configured to execute neither the charging suppression process nor the discharging suppression process.

(E4) In each of the above embodiments, functional units such as the SOC adjustment determination unit 314, the manufacturing information acquisition unit 316, and the SOC information acquisition unit 318 may be included in a device, such as the vehicle 100, other than the server 300. In this case, for example, as described in the third embodiment, all of the SOC adjustment determination unit 314, the manufacturing information acquisition unit 316, and the SOC information acquisition unit 318 may be included in the vehicle 100, or some of them may be included in the vehicle 100.

(E5) In each of the above-described embodiments, the external sensor is the camera 80. By contrast, the external sensor is not limited to the camera 80 but may be a distance measuring device, for example. The distance measuring device is a light detection and ranging (LiDAR) device, for example. In this case, detection result output from the external sensor may be three-dimensional point cloud data representing the vehicle 100. The server 300 and the vehicle 100 may acquire the vehicle location information through template matching using the three-dimensional point cloud data as the detection result and reference point cloud data, for example.

(E6) In the above-described first embodiment, the server 300 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 300 may acquire vehicle location information, determine a target location to which the vehicle 100 is to move next, and generate a route from a current location of the vehicle 100 indicated by the acquired vehicle location information to the target location. The server 300 may generate a route to the target location between the current location and a destination or generate a route to the destination. The server 300 may transmit the generated route to the vehicle 100. The vehicle 100 may generate a running control signal in such a manner as to cause the vehicle 100 to run along the route received from the server 300 and control an actuator using the generated running control signal.
(2) The server 300 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 300 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(E7) In the above-described embodiment in which the vehicle 100 can be running by autonomous control, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(E8) In the above-described embodiment in which the vehicle 100 can be running by autonomous control, the vehicle 100 acquires vehicle location information about the vehicle 100 using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control an actuator of the vehicle 100 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal. The functional configuration of the system 500 may be entirely provided at the vehicle 100. Specifically, the processes realized by the system 500 in the present disclosure may be realized by the vehicle 100 alone.

(E9) In the above-described first embodiment, the server 300 automatically generates a running control signal to be transmitted to the vehicle 100. By contrast, the server 300 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the server 300 through wire communication or wireless communication, for example, and the server 300 may generate a running control signal responsive to the operation on the operating device.

(E10) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a breaking device. The actuators are controlled by the controller that controls running of the vehicle 100. In order for the vehicle 100 to acquire information from outside for unmanned driving, the vehicle 100 is simply required to include the communication unit 190 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

($11) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(E12) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The control and its method described in the present disclosure may be implemented by a dedicated computer provided by configuring a processor and memory that are programmed to execute one or more functions embodied by computer programs. Alternatively, the control unit and its method described in the present disclosure may be implemented by a dedicated computer provided by configuring a processor with one or more dedicated hardware logic circuits. Alternatively, the control unit and its method described in the present disclosure may be implemented by one or more dedicated computers configured by a combination of a processor and memory programmed to execute one or more functions and another processor with one or more hardware logic circuits. The computer program may also be stored in a computer-readable non-transitory recording medium as an instruction to be executed by a computer.

The present disclosure is not limited to the embodiments described above and is able to be implemented with various configurations without departing from the spirit thereof. For example, the technical features of any of the embodiment, the examples and the modifications corresponding to the technical features of each of the aspects described in SUMMARY may be replaced or combined appropriately, in order to solve part or all of the problems described above or in order to achieve part or all of the advantageous effects described above. When the technical features are not described as essential features in the present specification, they are able to be deleted as necessary.

## Claims

1. A system (500) configured to be used in a factory (FC) for manufacturing a vehicle (100), comprising:
a remote control unit (312) for remotely controlling the vehicle (100) capable of running in the factory (FC) in a manufacturing process at the factory (FC), the vehicle (100) including a communication device having a communication function for remote control and a secondary battery for running;
a state-of-charge acquisition unit (318) for acquiring a state of charge of the secondary battery; and
a state-of-charge adjustment determination unit (314) for acquiring a target value of the state of charge and determining whether or not to adjust the state of charge using the acquired target value and a current state of charge,
wherein, , the remote control unit (312) is configured to execute a state-of-charge adjustment process by the remote control of the vehicle (100) when the state-of-charge adjustment determination unit (314) determines that the state of charge is to be adjusted, thereby bringing the state of charge closer to the target value, the state-of-charge adjustment process including at least one of a discharging process for discharging the secondary battery and a charging process for charging the secondary battery.

2. The system (500) according to claim 1, wherein the remote control unit (312) is configured to adjust an acceleration of the vehicle (100) when the vehicle (100) runs in the factory (FC), as the state-of-charge adjustment process.

3. The system (500) according to claim 2, wherein the remote control unit (312) is configured to execute at least one of an increase in the acceleration and an increase in number of times the vehicle (100) is accelerated, as the discharging process.

4. The system (500) according to claim 1, wherein the remote control unit (312) is configured to drive an auxiliary device (174) consuming power of the secondary battery as the discharging process to increase power consumption of the auxiliary device (174).

5. The system (500) according to claim 1, wherein the remote control unit (312) is configured to move the vehicle (100) to a position where the secondary battery is allowed to be charged by a charging device (200) for charging the secondary battery, as the charging process.

6. The system (500) according to claim 1, wherein the remote control unit (312) is configured to further execute a discharging suppression process for suppressing the discharging of the secondary battery and a charging suppression process for suppressing the charging of the secondary battery, as the state-of-charge adjustment process.

7. The system (500) according to claim 6, wherein the remote control unit (312) is configured to execute at least one of a reduction in an acceleration of the vehicle when the vehicle (100) runs in the factory (FC) and a reduction in number of times the vehicle (100) is accelerated, as the discharging suppression process.

8. The system (500) according to claim 6, wherein the remote control unit (312) is configured to reduce an amount of regenerative power of the vehicle (100), as the charging suppression process.

9. The system (500) according to claim 1, wherein the target value is set using a state of charge required when the vehicle (100) is shipped.

10. The system (500) according to claim 1, wherein the target value is set for each process in the manufacturing process.

11. A server (300) configured to be used in a factory (FC) for manufacturing a vehicle (100), the server comprising:
a remote control unit (312) for remotely controlling the vehicle (100) capable of running in the factory (FC) in a manufacturing process at the factory (FC), the vehicle (100) including a communication device having a communication function for remote control and a secondary battery for running;
a state-of-charge acquisition unit for acquiring a state of charge of the secondary battery; and
a state-of-charge adjustment determination unit (314) for acquiring a target value of the state of charge and determining whether or not to adjust the state of charge using the acquired target value and a current state of charge,
wherein the server (300) is configured so that, when the state-of-charge adjustment determination unit (314) determines that the state of charge is to be adjusted, at least one of a state-of-charge adjustment process using the remote control unit and a notification using the state-of-charge adjustment determination unit (314) is executed, the state-of-charge adjustment process including at least one of a discharging process for discharging the secondary battery by the remote control of the vehicle (100) and a charging process for charging the secondary battery by the remote control of the vehicle (100),
the notification being for encouraging at least one of a manual discharging operation for manually discharging the secondary battery and a manual charging operation for manually charging the secondary battery.

12. A method of manufacturing a vehicle (100;100c), comprising the steps of:
running the vehicle (100) in a factory (FC) by remote control in a manufacturing process at the factory (FC);
determining whether or not to adjust a state of charge of a secondary battery for running by using a current state of charge of the secondary battery and a target value of the state of charge, the secondary battery being mounted on the vehicle (100); and
executing at least one of discharging of the secondary battery and charging of the secondary battery by the remote control of the vehicle (100;100c) when the state of charge is determined to be adjusted, thereby bringing the state of charge closer to the target value.

13. A method of manufacturing a vehicle (100), comprising the steps of:
running the vehicle (100) in a factory (FC) by remote control in a manufacturing process at the factory (FC);
determining whether or not to adjust a state of charge of a secondary battery for running by using a current state of charge of the secondary battery and a target value of the state of charge, the secondary battery being mounted on the vehicle (100); and
causing a charging device (200) for charging the vehicle (100) to charge the secondary battery such that the state of charge becomes closer to the target value when the state of charge is determined to be adjusted.

14. A method of manufacturing a vehicle (100), comprising the steps of:
running the vehicle (100) in a factory (FC) by remote control in a manufacturing process at the factory (FC);
determining whether or not to adjust a state of charge of a secondary battery for running by using a current state of charge of the secondary battery and a target value of the state of charge, the secondary battery being mounted on the vehicle (100); and
transmitting information regarding the target value to a charging device (200) for charging the vehicle (100) when the state of charge is determined to be adjusted.

15. A charging device (200) configured to be used in a factory (FC) for manufacturing a vehicle (100;100c), the charging device (200) comprising:
a communication unit (290) for receiving a target value of a secondary battery for running in a manufacturing process at the factory (FC) , the secondary battery being included in the vehicle (100;100c) capable of running in the factory (FC); and
a charging control unit (212) for adjusting a charging condition of the secondary battery by using the received target value.

16. A method of manufacturing a vehicle (100), comprising the steps of:
running the vehicle (100) in a factory (FC) by remote control in a manufacturing process at the factory (FC); and
executing at least one of discharging of a secondary battery mounted on the vehicle (100) for running and charging of the secondary battery, thereby bringing a current state of charge of the secondary battery closer to a target value.

17. The method of manufacturing a vehicle (100) according to claim 16, wherein the step of executing at least one of discharging of the secondary battery and charging of the secondary battery, thereby bringing the current state of charge of the secondary battery closer to the target value is performed by the remote control of the vehicle (100).

18. A method of manufacturing a vehicle (100), comprising the steps of:
running the vehicle (100) in a factory (FC) by remote control in a manufacturing process at the factory (FC); and
causing a charging device (200) for charging the vehicle (100) to charge a secondary battery mounted on the vehicle (100) for running such that a current state of charge of the secondary battery closer to a target value.

19. A method of manufacturing a vehicle (100), comprising the steps of:
running the vehicle (100) in a factory (FC) by remote control in a manufacturing process at the factory (FC); and
transmitting information regarding a target value of a state of charge of the vehicle (100) to a charging device (200) for charging the vehicle (100).

20. A server (300) comprising:
a remote control unit (312) for running a vehicle (100) in a factory (FC) by remote control in a manufacturing process at the factory (FC),
wherein the remote control unit (312) is configured to execute at least one of discharging of a secondary battery mounted on the vehicle (100) and charging of the secondary battery, thereby bringing a current state of charge of the secondary battery closer to a target value.

21. A server (300) comprising:
a remote control unit (312) for running a vehicle (100) in a factory (FC) by remote control in a manufacturing process at the factory (FC),
wherein the remote control unit (312) is configured to cause a charging device (200) for charging the vehicle (100) to charge a secondary battery mounted on the vehicle (100) for running such that a current state of charge of the secondary battery becomes closer to a target value.

22. A server (300) comprising:
a remote control unit (312) for running a vehicle (100) in a factory (FC) by remote control in a manufacturing process at the factory (FC); and
a communication unit (290) for transmitting information regarding a target value of a state of charge of the vehicle (100) to a charging device (200) for charging the vehicle (100).
